# EUROPEAN PATENT APPLICATION

(11) **EP 1 602 283 A1**
(43) Date of publication of application: **07.12.2005**
(21) Application number: 04015026.0
(22) Date of filing: 25.05.2004
(51) Int. Cl.: A23G 9/02

(54) **Use of polyol esters of fatty acids in aerated frozen confection with decreased freezing point**

(71) Applicant: NESTEC S.A., 1800 Vevey (CH)
(72) Inventor: Schlegel, Myriam, 60000 Fouquenies (FR); Vieira, Joséllo, Batista, 95290 L'Isle-Adam (FR)
(74) Representative: Archambault, Jean

(57) **Abstract**

A frozen confection preserving its smoothness and exhibiting reduced ice crystal growth after being exposed to heat shock treatment and with decreased freezing point is produced comprising fat, sweetener, milk solids-not-fat and water, in which an emulsifier is used comprising propylene glycol monoester of fatty acid.

## Description

### Field of the invention

The present invention relates to the field of aerated frozen confections and in particular to aerated frozen confections with decreased freezing point, i.e. products that keep a soft and easy to scoop texture at serving temperatures of - 18° C and below.

### Background of the invention

It is well known by the man of the art that the depression of the freezing point in a frozen aerated dessert is causing a significant increase of the ice crystal growth over heat shock. Alternatively, the increase of temperature is causing the melting of the smallest crystal population while a subsequent decrease of temperature is causing an increase in size of the remaining crystals (recrystallisation).
In standard aerated frozen dessert containing fat levels between 6 and 12% and total solids between 34 and 42%, the mean ice crystal size after 7 days heat shock (alternately12h at -8°C/12h at -20°C) can vary in a range from 50 µm to 150 µm.

For the man of the art, it is possible to decrease the ice crystal growth to a value of approximatively 50µm, using the appropriate stabilizers and/or balance of ingredients in the overall recipe (level of total solids, level of fat). Classically used emulsifiers such as saturated or unsaturated mono-di glycerides, distilled monoglycerides or polyoxyethylene esters of sorbitan can help also the reduce the ice crystal size, but not below this value of 50 µm.

This increase in ice crystal size over heat shock tends to increase as the freezing point of the aerated frozen dessert decreases. As a consequence, the texture of the aerated frozen product looses its smoothness and the iciness of the products can be well detected by the consumer after heat shock. In addition this increase in ice crystal size can affect the overall stability of the aerated frozen dessert structure, which can cause in addition a very poor aspect after heat shock.

Frozen confections are traditionally made using ingredients such as: fat, milk solids-not-fat, sweeteners, stabilizers, emulsifiers and water. The various ingredients are mixed together, the mixture is then homogenized, pasteurized, cooled, optionally aged at about 2 to 6°C and deep-frozen with stirring with injection of air in a freezer to provide a degree of overrun of the order of 30 to 150%.

Various gums and/or emulsifiers have been used as additives with the aim of improving the stability, the smoothness and the resistance of frozen confections to heat shocks. These may include guar gum, carob or guar seed flour, alginate, carboxymethyl cellulose, xanthan, carrageenan, synthetic or natural emulsifiers. The milk proteins contained in the milk dry extract participate in this stabilization due to their water-binding property.

However, the use of gums has the disadvantage of conferring on the product a texture which is sometimes too firm or gummy.

In WO 01/06865 a solution to the problem of improved texture and stability of soft serve ice cream and resistance to heat shock is obtained by creating fine and stable air cells with the aid of a specific ternary blend of emulsifiers and milk solids-not-fat coming predominantly from skim milk.

EP-A-1 321 043 relates to a frozen aerated ice cream which has a soft structure at - 18° C, contains high amounts of freezing point depressing sugars and contains less than 0.5 % by weight glycerol. Since it is for use with soft serve ice dispensing devices which comprise extrusion of cartridges containing the soft ice cream on the place of consumption, stability after heat shock is not an issue since the consumer would not notice it.

The problem which the invention proposes to solve consists to control the ice crystal growth in aerated frozen products where the freezing point has been reduced by the addition of sugars with low molecular weight and/or addition of freezing point depressing agents such as polyols or alcohols.

### Summary of the invention

To this end, the present invention consists in a method of improving the control of ice crystal growth of aerated frozen confections with low freezing point after heat shock treatment, which comprises adding polyol esters of fatty acids (PEFA) alone or in combination with other food grade emulsifiers as primary emulsifier in an amount of at least 0.2 % by weight in the preparation of an aerated frozen confection with improved texture and stability.

### Detailed description of the invention

In the invention, a frozen confection preferably may comprise up to 12 % fat, 10 to 25% of sweeteners, 8 to 10 % of milk solids-not-fat, 0.1 to 0.5 % of stabilizers, at least 0.2 % of propylene glycol monoester of fatty acid as primary emulsifier and water as balance.

The milk solids-not-fat used for making a frozen confection may be powdered or concentrated defatted sweet whey, for example. They may include powdered or concentrated skim milk, for example. Milk solids-not-fat may also be derived from a commercial mixture of milk powder, sweet whey powder and whey proteins whose functionality has been modified by specific denaturation treatments.

The product of the invention comprises sweetener ingredients which are capable of decreasing its freezing point, selected from the group consisiting of sucrose, dextrose, glucose syrup, fructose, polyol, alcohol and a mixture of these agents, preferably a combination of sucrose, dextrose and glucose syrup, that provide a desired level of sweetness and texture and decrease the freezing point of the mixture.

In the context of the invention, a suitable polyol can be selected from the group consisting of sorbitol, mannitol, lactilol, xylitol, maltitol, glycerol and their mixtures; a suitable alcohol preferably is ethanol; glycerol and ethanol are preferred. The role of polyol or alcohol is to further soften the frozen confection by making it sufficiently soft to be scoopable at home freezer temperature of - 18° C or less. It is used to increase softness because it reduces ice content with less sweetening effect that sucrose.

Preferably, glycerol may be used at a level of 1 to 5 % by weight.
The fat may be of milk or vegetable origin and its level may be within a broad range. If less fat is used in combination with a freezing point depressing agent, it is then possible to manufacture a cheaper ice cream or an ice cream which is more dietetic with the same softness as a regular high fat ice cream.

Preferably, propylene glycol monoester of fatty acid is used as a primary emulsifier in an amount of 0.2 to 0.5 % and most preferably in an amount of at least 0.26 %. Preferably propylene glycol monostearate/palmitate is used.

The frozen confections may optionally comprise one additional emulsifier, for example, unsaturated monoglyceride or saturated mono-di glyceride in an amount of at least 5 % of the total emulsifiers, preferably in an amount of 0.04 to 0.16 % by weight as partial replacement of propylene glycol monoester of fatty acid.

The frozen confections may comprise stabilizing agents; these may include carob flour, guar flour, alginates, carboxymethyl cellulose, xanthan, carrageenan, gelatin, starches used alone or in the form of a mixture at a dose of 0.1 to 0.5 % by weight, preferably about 0.25 %.

The formulation of the product in the invention may in addition comprise colourings such as beta-carotene, for example, and/or any type of flavourings or perfumes customarily used to flavour frozen confections, such as vanilla, strawberry or chocolate for example.

The compositions used in the invention may optionally comprise additions such as fruit or fruit pieces, for example, or nuts, or hazelnuts, whole or in pieces, for example.

Furthermore, the organoleptic qualities of the frozen compositions are not reduced compared with the traditional products. Thus, the characteristics of smoothness and creaminess are increased and in particular, better preserved during the period of storage. In the frozen confections, it is the use of propylene glycol monoester of fatty acid, as emulsifier which makes it possible in addition to reduce remarkably the growth of water crystals in the products subjected to heat shock and thus it confers greater stability to heat shocks on the product.

For manufacturing the products, the ingredients entering into the composition of a frozen confection may be dispersed at around approximately 60 to 70° C for approximately 15 to 30 min., for example. The whole may be heated and homogenized at around 70 to 75° C, for example, at a pressure of the order of 140 to 220 bar, for example. These steps of dispersion, heating and homogenisation make it possible to bring about hydration of the stabilizer.

The mixture may then be pasteurized according to methods known to persons skilled in the art, for example at around 80 to 90° C for 10 to 30 s. The homogenisation-heating step may be carried out at a pasteurization temperature which brings about, on its own, pasteurization of the mixture. The mixture may then be cooled to around 2 to 8° C by known means. This mixture may then be aged or otherwise for 4 to 24 h at around 2 to 6° C, for example, with or without stirring. After this aging step, the mixture may be frozen at around -3 to -8° C, and preferably at about -4.5 to -7.5° C with stirring with injection of gas so as to produce a degree of overrun of the order of 30 to 150 %, for example. The mixture obtained may then be hardened by freezing at around -20 to -40° C, for example.

After the aging step, the frozen compositions may, for example, be extruded in the form of bars having a greater or lesser degree of overrun, with the aid of an ice-cream industry refrigerated scraped surface heat exchanger or freezer with injection of gas. The aerated semi-frozen composition coming out of the freezer may also be filled into containers or moulds under pressure using a bottom-up filler, for example.

To evaluate the remarkable properties of the emulsifier applied, various textural, microscopic and macroscopic tests may be carried out.

Standard heat shock: the samples initially stored at -30° C are subjected, for 7 days, to temperature cycles of -8° C/12h followed by -20° C/12h. After 7 days of stabilisation at -30° C, the melting parameters are evaluated for these samples which were subjected to a heat shock.

### Size of the ice crystals in an ice confection

An aliquot of ice confection is mixed with an equivalent quantity of glycerol and observed under a microscope at a temperature of -10° C. The measurement may be carried out in a chamber at -10° C equipped with microscope and a camera. It is thus possible to measure the mean diameter of the crystals (in µm) in the finished products and in the products which have been subjected to a heat shock (microscope magnification 129).

The frozen confections exhibit improved stability and organoleptic characteristics compared to traditional products. These products exhibit remarkable reduced ice crystal growth compared with traditional products when submitted to heat shock treatment. This property confers to the product smooth texture, which is considerably preserved after unfavourable storage conditions. Such functionalities make it possible to envisage production, storage and distribution of the products according to the invention extending over time.

The expression "reduced crystal growth" is understood to mean an increase in the mean diameter of the ice crystals of less than 50 % after heat shock.

The invention is described below with reference to examples of preferred embodiments and modes of formulation. However, various adaptations and/or modifications may be made while remaining within the scope of the present invention.

### Examples

### Example 1, comparative example 1: use of PEFA in the presence of freezing point depressing sugars

The objective of these examples is to produce soft aerated frozen confections with freezing point depressing sugars showing texture and sensory attributes which are comparable to a conventional product made with conventional ingredients currently used in the aerated frozen dessert preparation.

We were surprised to find that the use of polyol esters of fatty acids (PEFA), preferable propylene glycol monostearate (PGMS) alone or in combination with other food-grade emulsifiers, such as mono-diglycerides, produces aerated frozen products with outstanding texture properties and with good heat shock stability.

An example of frozen confections made according to the present invention and comparative example are produced according to the formulations indicated in Table 1 below.

The various ingredients are dispersed at 65° C and then undergo a hydration step at 60° C for 20 minutes. The mixture is then homogenized at 180 bar with the aid of homogenizer and then pasteurized at 86° C for 32 s. After cooling to 4° C, the mixture is aged for 24 hours at 4° C, without stirring. Finally, the mixture is frozen at about -7.5° C draw temperature (example 1) and at about -5.7° C draw temperature (comparative example 1) with a degree of overrun of about 100 %. The ice confection obtained is hardened at -30° C by conventional means.

**Table 1**

| Ingredient | Ex. 1 | Comp Ex. 1 |
|---|---|---|
| Vegetable lauric fat blend | 9 | 9 |
| Sweet whey powder (SWP) | 10 | 10 |
| PGMS | 0.3 | 0 |
| UMG | 0.08 | 0.08 |
| SMDG | 0 | 0.3 |
| Stabilizers | 0.2 | 0.25 |
| Sucrose | 1 | 14 |
| Glucose syrup | 6.5 | 3 |
| Dextrose | 11 | 0 |
| Water | 61.92 | 63.37 |
| Total solids % | 36.0 | 36.4 |
| Calculated freezing point (° C) | -2.3 | -3.01 |

Vegetable lauric fat blend: Blend of palm and palm kernel oil;
Sweet whey powder: whey proteins, non demineralised from Euroserum, 10 to 12 % protein;
Skim milk powder from BBA;
PGMS: Propylene glycol monostearate PGMS SPV® from Danisco;
UMG: Unsaturated monoglyceride DIMODAN UP/B® from Danisco;
SMDG: Saturated Mono-diglycerides: CREMODAN 60 Veg® from Danisco;
Stabilizers: Guar gum (Procol G2 from Habgen) or Sodium alginate (Manucol DM from ISP Alginates;
Glucose syrup: Glucose MD 40 from Roquette.

The freezing point achieved in this examples is an average value, to keep a very soft product at a serving temperature below -18° C it can be necessary to decrease the freezing point down to -4.5° C. e.g. by addition of 2.5 % of ethanol (at 98 volume) or 4 % glycerol, based on the total composition of the recipe. Table 2 below describes the measured mean ice crystal size of both recipes, example 1 and comparative example 1 after heat shock. Sample of example 1 which contains a blend of PGMS and UMG has smaller ice crystals and the crystals are significantly more resistant to growth following heat shock treatment compared to the other sample of comparative example 1.

**Table 2**

| Sample | Ice crystal size (µm) After heat schock |
|---|---|
| Example 1 | 30 |
| Comp. ex. 1 | 54.5 |

The heat shock samples were also evaluated for the texture attribute smoothness by a trained testing panel. The texture of the product of example 1 was showing a very high smoothness and the aspect was good.

We were surprised to find that with the use of polyol esters of fatty acids (PEFA), preferably PGMS alone or in combination with other food grade emulsifiers, such as unsaturated mono glyceride, we were able decrease the freezing point in aerated frozen products and keep the same smoothness and heat shock stability of a standard version.

## Claims

1. Method of improving the control of ice crystal growth of aerated frozen confections with low freezing point after heat shock treatment, which comprises adding polyol esters of fatty acids alone or in combination with other food grade emulsifiers as primary emulsifier in an amount of at least 0.2 % by weight in the preparation of an aerated frozen confection with improved texture and stability.

2. Method according to claim 1, in which propylene glycol monostearate/palmitate is added as primary emulsifier.

3. Method according to claim 1, wherein the aerated frozen confection, with or without fat and comprising freezing point depressing sweeteners, milk solids-not-fat, water, emulsifier and stabilizer, comprises by weight:
0 to 12 % fat,
4 to 10 % milk solids-not-fat,
10 to 25 % freezing point depressing sweeteners,
0 to 0.5 % stabilizers,
and it has an overrun of 30 to 150 % by volume.

4. Method according to claim 3, in which the aerated frozen confection comprises 2 to 12 % fat by weight.

5. Method according to claim 3, in which milk solids-not-fat are powdered or concentrated defatted sweet whey.

6. Method according to claim 3, in which the aerated confection comprises at least one stabilizer chosen from the group comprising carob flour, guar flour, alginates, carboxymethyl cellulose, xanthan, carrageenan, gelatin, starches used alone or in the form of a mixture at a dose of 0.1 to 0.5 %, preferably about 0.25 % by weight.

7. Method according to Claim 3, in which the freezing point depressing sweeteners are chosen from the group comprising sucrose, dextrose, fructose, glucose syrup, polyol, alcohol or a mixture of these agents.

8. Method according to claim 7, in which the freezing point depressing sweeteners comprise a suitable polyol or alcohol selected from the group consisting of sorbitol, mannitol, lactilol, xylitol, maltitol, glycerol, ethanol and their mixtures, glycerol and ethanol being preferred, in order to further soften the frozen confection by making it sufficiently soft to be scoopable at home freezer temperature of - 18° C or less.

9. Method according to claim 1, which comprises other food-grade emulsifier selected from the group consisting of unsaturated monoglyceride, saturated mono-di glyceride and their mixtures in an amount of 0.04 to 0.16 % by weight in partial replacement of propylene glycol monoester of fatty acid.

10. Method according to claim 1, wherein the smoothness of the aerated frozen confection is preserved and a reduced ice crystal growth after heat shock conditions is obtained.

11. Method according to claim 1, which comprises using propylene glycol monoester of fatty acid as an emulsifier in an amount of at least 0.26 % by weight.

12. Method according to claim 10, which comprises using propylene glycol monostearate/palmitate as emulsifier.
